# EUROPÄISCHE PATENTSCHRIFT

(11) **EP 2 011 751 B1**
(45) Veröffentlichungstag und Bekanntmachung des Hinweises auf die Patenterteilung: **20.07.2011**
(21) Anmeldenummer: 08009883.3
(22) Anmeldetag: 30.05.2008
(51) Int. Cl.: B65G 27/30, B65G 27/24

(54) **Vibrationslinearförderer**
Linear vibration feeder
Convoyeur linéaire de vibrations

(30) Priorität: 06.07.2007 DE 102007031640
(43) Veröffentlichungstag der Anmeldung: 07.01.2009
(73) Patentinhaber: Feintool Intellectual Property AG, 3250 Lyss (CH)
(72) Erfinder: Böger, Christian, 93049 Regensburg (DE); Bott, Klaus, 90518 Altdorf (DE); Edbauer, Franz, 93158 Teublitz (DE)
(74) Vertreter: Blaumeier, Jörg

(56) Entgegenhaltungen:
- EP-A- 1 731 451
- JP-A- 3 051 210

## Beschreibung

Die Erfindung betrifft eine Kombination aus Vibrationslinearförderer und zwei unterschiedlichen Antriebseinheiten.

Vibrationslinearförderer umfassend eine Nutzmasse und eine Gegenmasse, die über eine Antriebseinheit in entgegengesetzte Richtungen schwingend beweg bar sind, wobei die Antriebseinheit mit der Nutz- und der Gegenmasse gekoppelt ist und in einem Aufnahmeraum unterhalb der Nutzmasse angeordnet ist, dienen zum Fördern kleiner und kleinster Gegenstände oder Bauteile, die einer Arbeits- oder Montagemaschine zuzuführen sind, wo sie bearbeitet oder verbaut werden sollen. Der Vibrationslinearförderer dient zur Linearförderung der Teile, die in Folge der erzeugten Schwingungen der Förderschiene, längs welcher die Bauteile bewegt werden, über Mikrowürfe vorwärtsbewegt werden. Der Aufbau eines solchen Vibrationslinearförderers umfasst grundsätzlich eine Bodenplatte, über die der Förderer an einen Maschinentisch oder dergleichen festgelegt werden kann, sowie eine Gegenmasse und eine Nutzmasse, die beide über eine Antriebseinheit gekoppelt sind und über diese in eine gegenläufige Schwingbewegung gebracht werden können, wozu die Nutz- und die Gegenmasse mit der Bodenplatte über entsprechende Federelemente, üblicherweise Blattfederpakete, schwingbeweglich gekoppelt sind. Die Antriebseinheit ist zur Ermöglichung einer kompakten Bauweise unterhalb der Nutzmasse, die die Förderschiene umfasst, in einem dort befindlichen Aufnahmeraum zwischen Nutzmasse und Bodenplatte angeordnet.

Zumeist kommt als Antriebseinheit ein elektromagnetischer Antrieb, also ein Elektromagnet zum Einsatz. Der Magnetkern nebst der diesen umgebenden Wicklung ist mit der Gegenmasse verbunden, während der Magnetanker mit der Nutzmasse verbunden ist. Durch entsprechende Ansteuerung der Wicklung mit einer geeigneten Wechselspannung wird ein magnetisches Wechselfeld aufgebaut, das auf den Anker wirkt, wodurch die Schwingbewegung in an sich bekannter Weise erzeugt wird.

Bekannt ist aber auch der Einsatz einer Antriebseinheit umfassend einen piezoelektrischen Aktor, der an einer Blattfeder des Förderers angeordnet ist und über den diese gebogen werden kann. Ein solcher piezoelektrischer Aktor vollzieht bei Anlegen einer Wechselspannung eine spannungsbedingte, reversible Formänderung, die zur Schwingungserzeugung auf das Federelement übertragen wird. Mit einem solchen piezoelektrischen Aktor sind wesentlich höherfrequentere Schwingungen erzeugbar als mit einem Elektromagneten. Für beide Antriebseinheiten gibt es also spezielle Anwendungsgebiete, die den entsprechenden Einsatz entweder der einen oder anderen Antriebseinheit erfordern oder rechtfertigen.

Nachteilig hierbei ist, dass der konstruktive Aufbau bekannter Vibrationslinearförderer, die zum Einsatz von Elektromagneten vorgesehen sind, insbesondere im Hinblick auf die Ankopplung der Antriebseinheit an die Nutz- und die Gegenmasse anders ist als bei Verwendung eines piezoelektrischen Aktors, so dass sich antriebseinheitsabhängig unterschiedliche konstruktive Bauformen ergeben. Dies erfordert folglich die Herstellung und Lagerhaltung unterschiedlicher Bauteile.

Der Erfindung liegt damit das Problem zu Grunde, einen Vibrationslinearförderer anzugeben, der flexibler einsetzbar und konzeptionierbar ist.

Zur Lösung dieses Problems vorgesehen ist eine Kombination nach Anspruch 1.

Die Erfindung sieht ein quasi hybrides Linearförderersystem vor, bei dem die Möglichkeit besteht, einen Vibrationslinearförderer wahlweise entweder mit einer elektromagnetischen Antriebseinheit oder einer piezoelektrischen Antriebseinheit auszurüsten, wobei der Grundaufbau des Vibrationslinearförderers stets der gleiche ist. D. h., es sind keinerlei bauliche Veränderungen an der Bodenplatte oder der Nutzmasse oder der Gegenmasse vorzunehmen, um entweder die elektromagnetische Antriebseinheit oder die piezoelektrische Antriebseinheit integrieren zu können. Zu diesem Zweck sind die Antriebseinheiten derart ausgebildet, dass sie über positions- und artgleiche Befestigungsmittel verfügen, d. h., die an der jeweiligen Antriebseinheit vorgesehenen Befestigungsmittel sind - bezogen auf die Möglichkeit zur Verbindung mit entsprechenden Befestigungsmitteln an der Nutz- und der Gegenmasse - jeweils an der gleichen Stelle angeordnet und entsprechen sich auch in ihrer Art. Dies ermöglicht es, die Befestigungsmittel mit entsprechenden masseseitigen Befestigungsmitteln zu verbinden, wobei an der jeweiligen Masse nur einmal die entsprechenden Befestigungsmittel vorzusehen sind, da wie beschrieben erfindungsgemäß die jeweiligen Antriebseinheiten identisch aufgebaut sind.

Der erfindungsgemäße Vibrationslinearförderer bzw. das hybride Förderersystem ermöglicht es somit vorteilhaft, wahlweise unterschiedliche Antriebseinheiten rasch und montagemäßig einfach integrieren zu können, jeweils ausgehend von einem grundlegenden, stets gleichen, also quasi standardisierten Vibrationslinearfördereraufbau. Es können damit ohne weiteres bezogen auf den jeweiligen Einsatzzweck durch einfache Integration des entsprechenden Antriebs dessen besondere Vorzüge genutzt werden, bei gleichzeitiger Einfachheit des Fördereraufbaus hinsichtlich der Ausbildung der Nutz- und der Gegenmasse im Hinblick auf die Antriebsanbindung. Es sind folglich keine unterschiedliche Förderertypen herzustellen oder vorrätig zu halten, die antriebsspezifisch ausgelegt sind, vielmehr reicht ein einziger standardisierter Vibrationslinearförderer aus, um das gesamte Spektrum der verschiedenen Antriebe integrieren zu können. Der besondere Vorteil zeigt sich auch für den Anwender in der einfachen Umrüstmöglichkeit, da er, sollte der vorhandene Linearförderer für einen anderen Zweck genutzt werden, der den Einsatz eines anderen Antriebs fordert, lediglich die Antriebseinheit austauschen muss.

Die Befestigungsmittel sind bevorzugt Gewindebohrungen, in die durch entsprechende Durchsteckaufnahmen am jeweiligen Gegenteil zu führende Befestigungsschrauben eingeschraubt werden können. Entweder sind an der Antriebseinheit Gewindebohrungen vorgesehen und an den Massen Durchsteckaufnahmen oder umgekehrt, wobei selbstverständlich auch "Mischsysteme" denkbar sind, d. h., dass zur Anbindung an die Nutzmasse die Nutzmasse mit Durchsteckaufnahmen und die Antriebseinheit mit Gewindebohrungen versehen ist, während zur Anbindung an die Gegenmasse die Gegenmasse die Gewindebohrung aufweist, während die Antriebseinheit Durchsteckaufnahmen aufweist. Die Ausgestaltung ist hier letztlich beliebig, insgesamt ist es jedoch zweckmäßig, eine einfache und schnelle Montage und Demontage zu ermöglichen.

Weitere Vorteile, Merkmal und Einzelheiten der Erfindung ergeben sich den im Folgenden beschriebenen Ausführungsbeispielen sowie anhand der Zeichnungen. Dabei zeigen:
- Fig. 1: eine Prinzipdarstellung eines erfindungsgemäßen Vibrationslinear- förderers ohne eingesetzte Antriebseinheit,
- Fig. 2: eine Prinzipdarstellung eines erfindungsgemäßen Linearförderers mit eingesetzter elektromotorischer Antriebseinheit, und
- Fig. 3: den erfindungsgemäßen Linearförderer mit eingesetzter piezoelektri- scher Antriebseinheit.

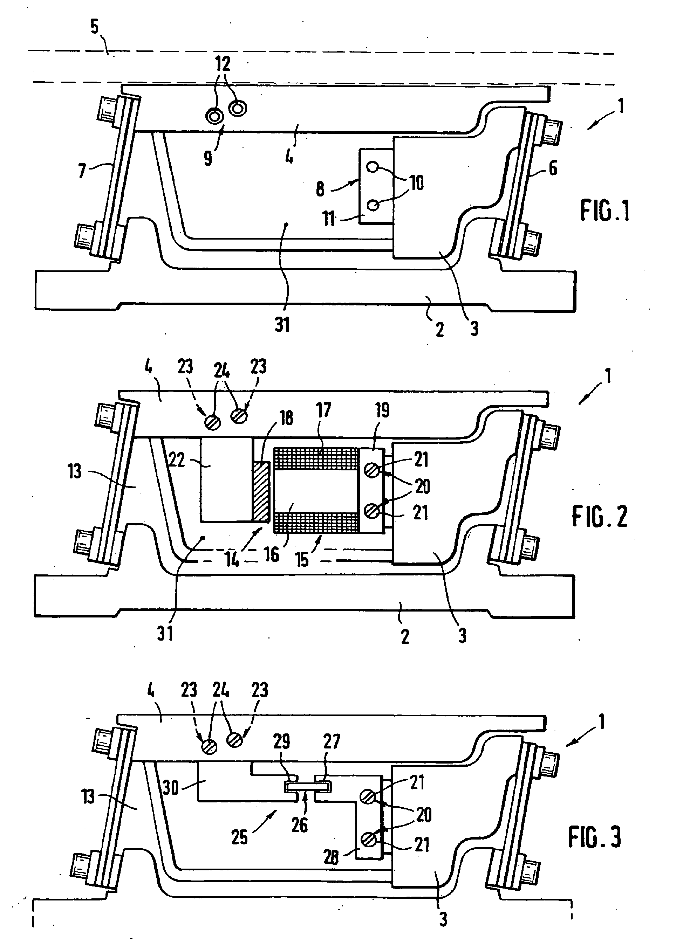

Fig. 1 zeigt eine Prinzipdarstellung eines erfindungsgemäßen Linearförderers 1 umfassend eine Bodenplatte 2, über die er mit einem Drittgegenstand, beispielsweise einem Maschinentisch oder -gestell zu verbinden ist. Vorgesehen ist ferner eine Gegenmasse 3 und einen zu dieser separate Nutzmasse 4 umfassend hier nur gestrichelt dargestellte Förderschiene 5. Die Gegenmasse 3 sowie die Nutzmasse 4 sind über jeweilige Federelemente 6, 7, üblicherweise Blattfederpakete, an beiden Enden mit der Bodenplatte 2 verbunden, worüber eine schwingbewegliche Lagerung der Gegen- oder der Nutzmasse 3, 4 relativ zu Bodenplatte 2 wie auch gegeneinander ermöglicht wird. In den Figuren ist jeweils nur das vordere zweier in dieser Ansicht hintereinander liegender Federelemente 6, 7 zu sehen, von denen jeweils eines mit der Gegenmasse (das jeweilige Federelement 6) und das andere mit der Nutzmasse (das jeweilige Federelement 7) verbunden ist. Die Ausgestaltung ist dabei derart, dass die beiden Federelemente 6, über die die Gegenmasse 3 mit der Bodenplatte 2 verbunden ist, nicht in Längsrichtung des Linearförderers 1 gesehen hintereinander, sondern versetzt zueinander angeordnet sind, entsprechendes gilt für die beiden die Nutzmasse 4 mit der Bodenplatte 2 koppelnden Federelemente 7, von denen in den Figuren ebenfalls nur eines sichtbar ist, auch diese sind versetzt zueinander. Insgesamt ergibt sich eine gekreuzte Federelementanordnung, d. h., die Nutzmasse 4 ist ausgehend von der Darstellung in Fig. 1 am linken Ende über ein rechts angeordnetes Federelement 7 mit der Bodenplatte 2 verbunden, am anderen Ende befindet sich das Federelement 7 links, während die Gegenmasse am in Fig. 1 gezeigten linken Ende über ein links angeordnetes Federelement 6 und am rechten Ende über das rechts angeordnete Federelement 6 mit der Bodenplatte 2 verbunden ist. Hierzu sind die Gegen- und die Nutzmasse 3, 4 entsprechend ausgebildet bzw. in ihrer Geometrie so gewählt, dass sich jeweilige Befestigungspositionen ergeben. Sie weisen entsprechende Ansätze auf, an denen die Federelemente befestigt werden. An der Gegenmasse ist ferner eine eingefräßte Tasche 31 vorgesehen, in der die Antriebseinheit gleich welcher Art aufgenommen ist.

Gezeigt sind ferner an der Gegenmasse 3 und an der Nutzmasse 4 ausgebildete Befestigungsmittel 8, 9, wobei es sich bei den Befestigungsmitteln 8 um Gewindebohrungen 10 handelt, die an einem Fortsatz 11 der Gegenmasse 3, der in seiner Geometrie und Größe beliebig gewählt werden kann, vorgesehen sind, während die Befestigungsmittel 9 als Durchsteckdurchbrechungen 12 ausgeführt sind. In ihnen werden zur Befestigung einer entsprechenden Antriebseinheit Befestigungsschrauben aufgenommen, wie anhand der Ausführungsbeispiele in den Fig. 2 und 3 nunmehr erläutert wird.

Fig. 2 zeigt den erfindungsgemäßen Vibrationslinearförderer 1 (wobei hier die Förderschiene nicht näher gezeigt ist), wobei in dem Aufnahmeraum 13 zwischen der Nutzmasse 4 und der Bodenplatte 2 eine Antriebseinheit 14 umfassend einen Schwingmotor 15 mit einem Magnetkern 16 und einer diesen umgebenden Wicklung 17 sowie einem beabstandeten Anker 18 angeordnet ist. Der Magnetkern 16 nebst Wicklung 17 weist einen Befestigungsabschnitt 19 auf, an dem Befestigungsmittel 20 in Form geeigneter Durchsteckdurchbrechungen vorgesehen sind, durch die Befestigungsschrauben 21 geführt sind, die in die Gewindebohrungen 10 der Nutzmasse 3 eingeschraubt sind.

Der Magnetanker 18 ist an einem Ansatz 22 angeordnet, der seinerseits hier nicht sichtbare Befestigungsmittel 23 (gestrichelte Pfeile) aufweist, die als Gewindebohrungen ausgeführt sind, und in die Befestigungsschrauben 24 geschraubt sind, die zuvor die Durchsteckdurchbrechungen 12 durchsetzen. Hierüber erfolgt die Verbindung des Magnetankers 18 mit der Nutzmasse 3. Im Betrieb wird die Wicklung 17 mit einer entsprechenden Wechselspannung belegt, so dass sich ein Wechselmagnetfeld ergibt, über das der Magnetanker 18 kontinuierlich angezogen bzw. abgestoßen wird, worüber die gegenläufige Schwingung von Gegenmasse zur Nutzmasse erzeugt wird.

Fig. 3 zeigt den Linearförderer 1 aus Fig. 1 wobei hier anstelle der elektromagnetischen Antriebseinheit 14 eine piezoelektrische Antriebseinheit 25 umfassend einen piezoelektrischen Aktor 26 im Bauraum 13 integriert ist. Der piezoelektrische Aktor, der hier nur als Prinzipbauteil dargestellt ist, ist mit einem Ende in einer Aufnahme 27 eines Befestigungsteils 28 zum Verbinden mit der Gegenmasse 3 aufgenommen. Auch hier weist das Befestigungsteil 28 Befestigungsmittel 20 in Form geeigneter Durchsteckaufnahmen auf, in die auch hier entsprechende Befestigungsschrauben 21 eingesetzt sind, die in die Gewindebohrungen 10 der Nutzmasse 3 eingeschraubt sind. Die Lage der Befestigungsmittel 20, also der antriebseinheitsseitigen Durchsteckaufnahmen, entspricht exakt der Lage der Befestigungsmittel, also der Durchsteckaufnahmen 20, die am Elektromagneten ausgebildet sind.

Das andere Ende des piezoelektrischen Aktors 26 ist in einer geeigneten Aufnahme 29 eines Befestigungsteils 30 aufgenommen, das mit der Nutzmasse 4 verbunden ist. Auch dieses Befestigungsteil 30 weist, wie auch der Ansatz 22, entsprechende, hier nicht sichtbare Befestigungsmittel 23 (gestrichelte Pfeile) in Form von Gewindebohrungen auf, in die auch hier Befestigungsschrauben 24 eingeschraubt sind, die zuvor die nutzmassenseitig vorgesehenen Durchsteckaufnahmen 12 durchsetzen. Auch hier entspricht die Lage und Art der Befestigungsmittel 23 genau der Lage und Art der Befestigungsmittel 23 am Elektromagnet-Ansatz 22.

Ersichtlich lässt also die positions- und artgleiche Anordnung und Ausbildung der Befestigungsmittel an den unterschiedlichen Antriebseinheiten 14 und 25 die Integration in den standardisiert aufgebauten bzw. mit standardisiert positionierten und ausgelegten Befestigungsmitteln versehenen Linearförderer 1 zu, so dass nur noch ein Typ von Förderer vorzuhalten ist, in den je nach Bedarf eine entsprechende Antriebseinheit in einer einfachen Montage integriert werden muss.

## Patentansprüche

1. Kombination aus Vibrationslinearförderer und zwei unterschiedlichen Antreibseinheiten (14;25), wobei der Vibrationslinearförderer eine Nutzmasse und eine Gegenmasse umfasst, die über eine Antriebseinheit in entgegengesetzte Richtungen schwingend bewegbar sind, und wobei eine Antriebseinheit mit der Nutz- und der Gegenmasse (4;3) gekoppelt ist und in einem Aufnahmeraum unterhalb der Nutzmasse angeordnet ist, wobei die erste Antriebseinheit (14), umfassend einen piezoelektrischen Aktor, und die zweite, umfassend einen Elektromagneten (15), (26) im Austausch einbaubar sind, wobei an jeder Antriebseinheit (14, 25) positions- und artgleiche Befestigungsmittel (20, 23) zum direkten Verbinden mit an der Nutz- und der Gegenmasse (3, 4) angeordneten Befestigungsmitteln (8, 9) vorgesehen sind.

2. Kombination nach Anspruch 1, **dadurch gekennzeichnet, dass** die antriebseinheitseitigen Befestigungsmittel (20, 23) Gewindebohrungen und die nutz- und gegenmassenseitigen Befestigungsmittel (8, 9) Durchsteckaufnahmen zur Aufnahme von Befestigungsschrauben (24), oder umgekehrt, sind.

## Claims

1. A combination of linear vibratory feeder and two different drive units (14; 25), wherein the linear vibratory feeder provides a useful mass and a counter mass, which can be displaced in opposite directions in a oscillating manner via a drive unit, and wherein a drive unit is coupled to the useful mass and the counter mass (4; 3) and arranged in a housing space below the useful mass, wherein the first drive unit (14), comprising a piezoelectric actor (26), and the second, comprising an electromagnet (15), can be installed in an exchangeable manner, wherein attachment means (20, 23) of the same type and in the same position are provided on each drive unit (14, 25) for direct connection to attachment means (8, 9) disposed on the useful mass and the counter mass (3, 4).

2. The combination according to claim 1,
**characterised in that**
the attachment means (20, 23) on the drive unit are threaded boreholes, and the attachment means (8, 9) on the useful mass and the counter mass are through-apertures for receiving attachment screws (24), or vice versa.

## Revendications

1. Combinaison de transporteur linéaire à vibration et de deux unités d'entraînement (14 ; 25) différentes, le transporteur linéaire à vibration comprenant une masse utile et une contre-masse, qui peuvent être déplacées de façon vibrante dans des directions opposées au moyen d'une unité d'entraînement, et une unité d'entraînement étant couplée avec la masse utile et la contre-masse (4 ; 3) et étant disposée dans un espace de logement au-dessous de la masse utile, l'unité d'entraînement (14), comprenant un actionneur piézo-électrique (26), et la seconde unité d'entraînement, comprenant un électroaimant (15), pouvant être montées en échange, des moyens de fixation (20, 23) identiques au niveau de la position et de la nature étant prévus sur chaque unité d'entraînement (14, 25) pour la liaison directe avec des moyens de fixation (8, 9) disposés sur la masse utile et la contre-masse (3, 4).

2. Combinaison selon la revendication 1, **caractérisée en ce que** les moyens de fixation (20, 23) côté unité d'entraînement sont des alésages filetés et les moyens de fixation (8, 9) côté masse utile et contre-masse étant des logements de traversée pour le logement de vis de fixation (24) ou inversement.
